# EUROPÄISCHE PATENTSCHRIFT

(11) **EP 2 688 782 B1**
(45) Veröffentlichungstag und Bekanntmachung des Hinweises auf die Patenterteilung: **17.10.2018**
(21) Anmeldenummer: 12701140.1
(22) Anmeldetag: 27.01.2012
(51) Int. Cl.: B60T 17/22, B60T 8/32, B60T 8/40, B60T 8/48

(54) **VERFAHREN UND SYSTEM ZUR KOMPENSATION EINES MANGELNDEN DRUCKAUFBAUS IM BREMSSYSTEM EINES FAHRZEUGS**
METHOD AND SYSTEM FOR COMPENSATING FOR AN INSUFFICIENT PRESSURE BUILD-UP IN THE BRAKE SYSTEM OF A VEHICLE
PROCÉDÉ ET SYSTÈME POUR COMPENSER UNE MONTÉE EN PRESSION INSUFFISANTE DANS LE SYSTÈME DE FREINAGE D'UN VÉHICULE

(30) Priorität: 23.03.2011 DE 102011005984
(43) Veröffentlichungstag der Anmeldung: 29.01.2014
(73) Patentinhaber: Robert Bosch GmbH, 70442 Stuttgart (DE)
(72) Erfinder: GONZALEZ ROMERO, Rafael, 74360 Ilsfeld-Auenstein (DE); BRUEX, Thomas, 71720 Oberstenfeld (DE); DITTRICH, Sabrina, 71711 Murr (DE); BUSSMANN, Otmar, 74232 Abstatt (DE)
(86) Internationale Anmeldenummer: PCT/EP2012/051319
(87) Internationale Veröffentlichungsnummer: WO 2012/126651

(56) Entgegenhaltungen:
- DE-A1-102006 022 734

## Beschreibung

Die Erfindung betrifft ein Verfahren ausgehend vom Oberbegriff des Anspruchs 1. Die Erfindung betrifft weiterhin ein System ausgehend vom Oberbegriff des Anspruchs 7.

### Stand der Technik

DE 10 2006 022734 A1 offenbart ein Verfahren gemäß dem Oberbegriff des Anspruchs 1.

Die Bremsanlage eines Fahrzeugs, insbesondere Kraftfahrzeugs, dient dazu, die Geschwindigkeit des Fahrzeugs zu verringern, es zum Stillstand zu bringen oder es im Stillstand zu halten. Die Bremsanlage weist mindestens eine Betätigungseinrichtung auf, welche die Wirkung in die Bremsanlage einleitet und steuert. Diese Betätigungseinrichtung - zum Beispiel ein Bremspedal - ist vom Benutzer/Fahrer des Fahrzeugs mechanisch betätigbar. Eine Bremskraftverstärkereinrichtung verstärkt die vom Fahrer aufzuwendende Kraft beim Betätigen der Betätigungseinrichtung und verringert somit den erforderlichen Kraftaufwand. Es ist bei den meisten Personenkraftwagen (PKW) in Kombination mit einem Hauptbremszylinder Bestandteil der Bremsanlage dieser PKW. Eine typische Bauform einer Bremskraftverstärkereinrichtung ist das Vakuum-Bremskraftverstärker-System, seltener wird ein Hydraulik-Bremskraftverstärker-System verwendet.
Eine Fahrdynamikregelung bzw. Electronic Stability Control (ESC), im deutschsprachigen Raum häufig auch als Elektronisches Stabilitätsprogramm (ESP) genannt, bezeichnet ein elektronisch gesteuertes Fahrerassistenzsystem für Kraftfahrzeuge, das durch gezieltes Abbremsen einzelner Räder dem Ausbrechen des Kraftfahrzeugs entgegenwirkt. Dazu weist das Fahrerassistenzsystem ein ESP-Aggregat auf. Teil der Fahrdynamikregelung sind unter Anderem auch Zusatzfunktionen. Eine Zusatzfunktion ist dabei ein Kompensationssystem, das bei einem Ausfall oder einer Fehlfunktion der Bremskraftverstärkereinrichtung eingreift (zum Beispiel die Hydraulic Boost Failure Compensation (HBC-) Funktion im Bosch ESP).

In verschieden Fahrzeugen wird dazu heutzutage ein Verfahren eingesetzt, bei dem der Fahrer im Falle eines Ausfalls oder einer Fehlfunktion der Bremskraftverstärkereinrichtung durch einen geregelten aktiven Druckaufbau unterstützt wird. Dieser Druckaufbau darf dabei jedoch nur dann erfolgen, wenn sichergestellt ist, dass der Fahrer die Bremsanlage mittels Betätigungseinrichtung auch betätigt hat. In einer der heutigen Ausführungen des Verfahrens werden der gemessene Vordruck des ESP-Aggregats und das Signal des Bremslichtschalters (BLS) zusammen als ausreichendes Kriterium zum Auslösen der Druckkompensation verwendet.

Nur wenn das Signal der Vordruckmessung im Bremssystem einen bestimmten Schwellwert überschreitet (z.B. 2 bar) und der Bremslichtschalter eingeschaltet ist, also ein feste Auslöseposition als Verstellwegschwelle vom Betätigungselement auf seinem Verstellweg überschritten ist, wird die Kompensation aktiviert. Somit wird ausgeschlossen, dass es zu einem ungewollten Druckaufbau und damit zu einer ungewollten Verzögerung bei einem Druckoffset oder bei einem Fehler des Bremslichtschalters kommt. Durch diese zusätzliche Kopplung des Auslösens an den Bremslichtschalter muss eine fest vorbestimmte Auslöseposition des Betätigungselements erreicht oder überschritten werden. Kommt es beispielsweise zu einem Ausfall der Bremskraftverstärkereinrichtung, so ist dazu eine recht hohe Kraft aufzuwenden.

### Offenbarung der Erfindung

Das erfindungsgemäße Verfahren mit den in Anspruch 1 genannten Merkmalen und das erfindungsgemäße Kompensationssystem mit den in Anspruch 7 genannten Merkmalen bieten den Vorteil, dass der Kraftaufwand auf das Betätigungselement zum Auslösen der Kompensation verringert ist.

Beim erfindungsbemäßen Verfahren ist vorgesehen, dass eine aktuelle Position des Betätigungselements kontinuierlich oder periodisch ermittelt wird und dass das Auslösen sowie der zusätzliche Druckaufbau in Abhängigkeit dieser ermittelten aktuellen Position erfolgt. Die aktuelle Position des Betätigungselements hat somit auch einen Einfluss auf die Stärke des Druckaufbaus. Da die aktuelle Position des Betätigungselements ständig oder zumindest regelmäßig ermittelt wird, und nicht nur ein Zeitpunkt oder ein Zeitintervall, indem das Betätigungselement eine feste Auslöseposition erreicht oder überschritten hat, lassen sich auch weitere Auswirkungen des Ausfalls oder der Fehlfunktion der Bremskraftverstärkereinrichtung kompensieren. Weiterhin lässt sich die Position des Betätigungselements unbeeinflusst von der hydraulischen Verstärkung ermitteln.
Das Verfahren wird bevorzugt im Rahmen eines Kompensationssystems realisiert, das bei einem Ausfall oder einer Fehlfunktion der Bremskraftverstärkereinrichtung eingreift (HBC: Hydraulic Boost Failure Compensation). Diese Kompensation unterstützt den Benutzer/Fahrer nach dem Auslösen bei jeglichen Bremsvorgängen. Eine derartige Kompensation ist besonders wichtig, wenn das Betätigungselement sehr kräftig betätigt wird, da in diesem Fall die volle Verzögerung erwünscht ist, die ohne Kompensation wohlmöglich nicht erreicht wird. Bei einer solchen sehr kräftigen Betätigung des Betätigungselements sollte insbesondere ein Bremsdruck größer 30 bar aufgebaut werden.

Erfindungsgemäß ist vorgesehen, dass die Kompensation ausgelöst wird, wenn die aktuelle Position eine vorgebbare Auslöseposition auf dem Verstellweg erreicht oder überschreitet. Diese Auslöseposition wird insbesondere durch einen Versatzabgleich (Offset-Abgleich) vorgegeben. Die Vorgabe der Auslöseposition kann zum Beispiel den Grad der Fehlfunktion der Bremskraftverstärkereinrichtung berücksichtigen.
Wird eine Fehlfunktion oder gar ein Ausfall der Bremskraftverstärkereinrichtung erkannt (zum Beispiel durch Detektieren eines geringen Vakuums oder eines Boosterfehlers) und hat die aktuelle Position eine vorgebbare Auslöseposition auf dem Verstellweg erreicht oder überschritten, so wird ein aktiver Druckaufbau mittels des Aggregats eingeleitet.
Insbesondere wird neben der aktuellen Position des Betätigungselements auch ein der Position zugeordneter Druck im Bremssystem kontinuierlich oder periodisch ermittelt und die Auslöseposition in Abhängigkeit des Drucks bestimmt.
Gemäß einer weiteren vorteilhaften Ausgestaltung der Erfindung ist vorgesehen, dass die Kompensation durch eine Fahrdynamikregelung eines Fahrassistenz-Systems des Fahrzeugs erfolgt. Im Rahmen des Elektronischen Stabilitätsprogramms (ESP) eines Kraftfahrzeugs ist ein Aggregat (ESP-Aggregat) mit einer Pumpe oder mehreren Pumpen vorgesehen, die nach Auslösen zusätzliche Bremsflüssigkeit in einen oder mehrere zugehörige(n) Radbremszylinder des Bremssystems fördert und damit den Bremsdruck in dem Bremszylinder oder den Bremszylindern (weiter) erhöht.

Gemäß einer vorteilhaften Ausgestaltung des erfindungsgemäßen Verfahrens erfolgt die Kompensation weiterhin in Abhängigkeit eines Vordrucks des Bremssystems. Neben der ermittelten aktuellen Position des Betätigungselements geht auch der Vordruck des Bremssystems beim Druckaufbau ein. Ist der Vordruck kleiner als ein Schwellwert, so erfolgt ein aktiver Druckaufbau bis zu einem vorgebbaren Maximaldruck, der einer tolerierbaren Verzögerung entspricht. Ist der Vordruck größer als oder gleich diesem Schwellwert, so erfolgt ein aktiver Druckaufbau in Abhängigkeit vom Vordruck.

Gemäß einer weiteren vorteilhaften Ausgestaltung der Erfindung ist vorgesehen, dass das Betätigungselement ein Pedal ist. Bei Kraftwagen ist die Ausführung des Betätigungselements als Pedal üblich. Weiterhin ist der entsprechende Sensor dabei ein Pedalwegsensor.

In einer weiteren bevorzugten Ausgestaltung der Erfindung ist vorgesehen, dass der Druckaufbau mittels des Aggregats nach dem Auslösen während einer einstellbaren Zeit begrenzt ist. Dies ist ein zusätzlicher Sicherheitsaspekt.

Erfindungsgemäß ist beim System vorgesehen, dass dieses System einen Sensor zur kontinuierlichen oder periodischen Ermittlung einer aktuellen Position des Betätigungselements auf seinem Verstellweg und eine Einrichtung zur Steuerung und/oder Regelung des Aggregats in Abhängigkeit dieser ermittelten aktuellen Position aufweist.

In einer bevorzugten Ausgestaltung der Erfindung ist vorgesehen, dass das System Teil eines Fahrassistenz-Systems des Fahrzeugs, insbesondere einer Zusatzfunktion dieses Fahrassistenz-Systems, ist. Dieses Fahrassistenz-System weist das Aggregat (ESP-Aggregat) auf. Das Kompensationssystem, das bei einem Ausfall oder einer Fehlfunktion des Bremskraftverstärker-Systems eingreift, ist zum Beispiel das Hydraulic Boost Failure Compensation (HBC-) System im Bosch ESP.

Gemäß einer vorteilhaften Ausgestaltung der Erfindung ist vorgesehen, dass die Einrichtung zum Auslösen der Kompensation weiterhin ein Eingangssignal proportional zum Vordruck des Bremssystems erhält.

Gemäß einer weiteren vorteilhaften Ausgestaltung der Erfindung ist vorgesehen, dass das Betätigungselement ein Pedal ist. Bei Kraftwagen ist die Ausführung des Betätigungselements als Pedal üblich. Weiterhin ist der entsprechende Sensor ein Pedalwegsensor.

Die Erfindung wird im Folgenden anhand von Abbildungen näher erläutert. Es zeigt
- Figur 1: eine schematische Darstellung eines Systems zur Kompensation eines mangelnden Druckaufbaus im Bremssystem eines Fahrzeugs gemäß einer bevorzugten Ausführungsform der Erfindung und
- Figur 2: ein Flussdiagramm einer besonders bevorzugten Ausführungsform des erfindungsgemäßen Verfahrens.

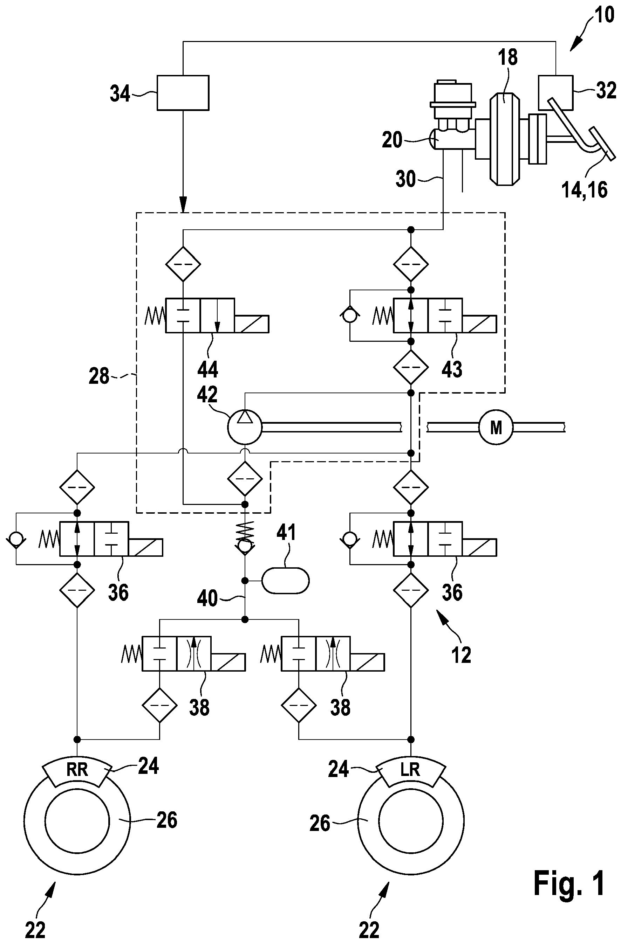

Die Figur 1 zeigt den prinzipiellen Aufbau eines Kompensationssystems 10 zur Kompensation eines mangelnden Druckaufbaus im Bremssystem 12 eines Fahrzeugs (Fahrzeug als Ganzes nicht gezeigt). Das Bremssystem 12 weist ein als Bremspedal 14 ausgebildetes Betätigungselement 16, eine Bremskraftverstärkereinrichtung 18, einen Hauptzylinder 20, Radbremsen 22 (von denen nur zwei dargestellt sind) mit je einem den Bremszylinder aufweisenden Bremssattel 24 und einer Bremsscheibe 26, sowie ein als ESP-Aggregat (ESP: Elektronisches Stabilitätsprogramm) ausgebildetes Aggregat 28 zum zusätzlichen Druckaufbau im Bremssystem 12 auf. Der Hauptzylinder 20 ist einerseits über die Bremskraftverstärkereinrichtung 18 mit dem Betätigungselement 16 und andererseits hydraulisch über Bremsleitungen 30 und das Bremssystem 12 mit dem Bremszylinder der Radbremse 22 verbunden.

Das Kompensationssystem 10 umfasst neben dem Aggregat 28 einen Sensor 32 zur kontinuierlichen oder periodischen Ermittlung einer aktuellen Position des Betätigungselements 16 auf seinem Verstellweg und eine Einrichtung 34 zum Steuern und/oder Regeln der Kompensation in Abhängigkeit dieser ermittelten aktuellen Position. Dazu erhält die Einrichtung 34 weiterhin ein Eingangssignal proportional zur aktuellen Position des Betätigungselements 16 (Pfeil). Optional erhält die Einrichtung 34 weiterhin ein Eingangssignal proportional zum Vordruck des Bremssystems 12.

Das Bremssystem 12 weist neben dem Aggregat 28 einen Hauptpfad auf, der sich in je einen Pfad pro Radbremse 22 aufteilt. Jeder dieser Pfade weist ein Einlassventil 36 und einen Bypass mit einem Auslassventil 38 auf, der in einen gemeinsamen Rückförderpfad 40 mündet, in dem eine Speichereinrichtung 41 und eine als Rückförderpumpe ausgebildeten Pumpe 42 angeordnet sind.

Die hier exemplarisch gezeigte Ausführungsform des Aggregats 28 weist die Pumpe 42 sowie ein Umschaltventil 43 im Hauptpfad als auch ein Ansaugventil 44 in einem Pfad zwischen hauptzylinderseitigem Ende der Bremsleitung 30 und einem Abschnitt des Rückförderpfades 40 zwischen Pumpe 42 und Speichereinrichtung 41 auf. Die Pumpe 42 (Rückförderpumpe) ist vom Motor M des Fahrzeugs angetrieben.

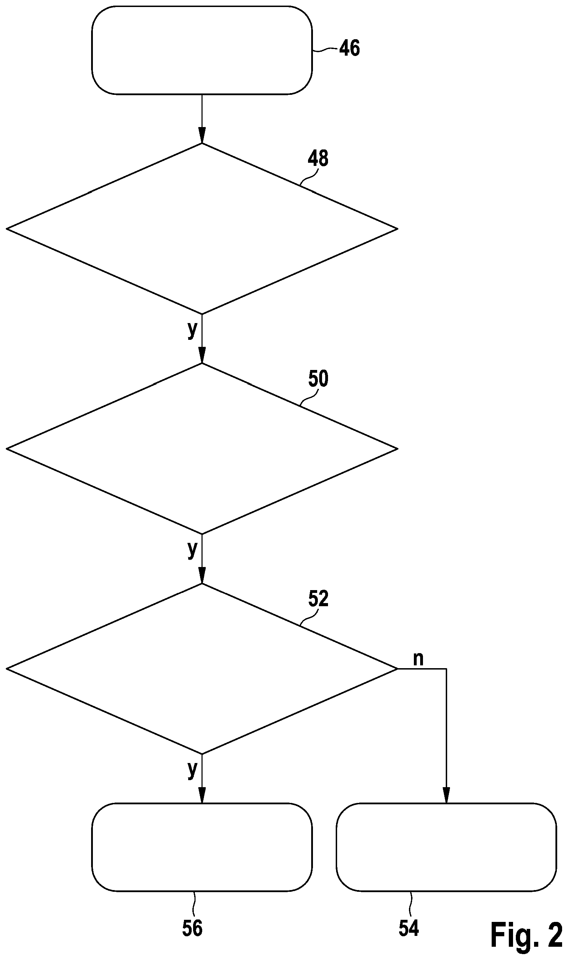

Fig. 2 zeigt ein Flussdiagramm des erfindungsgemäßen Kompensationsverfahrens und insbesondere dessen Auslöseprozess. Es ergibt sich folgende Funktion des in Fig. 1 gezeigten Systems 10:
Ausgehend von einem Startpunkt 46 gelangt man zu einer ersten Abfrage 48, bei der abgefragt wird, ob eine Fehlfunktion oder gar ein Ausfall der Bremskraftverstärkereinrichtung 18 erkannt ist (zum Beispiel durch Detektieren eines geringen Vakuums oder eines Boosterfehlers bei der Bremskraftverstärkereinrichtung). Liegt ein solcher Ausfall oder eine solche Fehlfunktion nicht vor, so werden keine weiteren Auslösekriterien abgefragt und auch keine Kompensation (ein aktiver Druckaufbau) ausgelöst.

Liegt jedoch ein solcher Ausfall oder eine solche Fehlfunktion vor (Pfad y), so wird bei der anschließenden zweiten Abfrage 50 abgefragt, ob die ermittelte aktuelle Position des Betätigungselements 16 eine vorgebbare Auslöseposition, insbesondere eine durch einen Abgleich vorgegebene Auslöseposition, auf dem Verstellweg des Betätigungselements 16 erreicht oder überschritten hat. Ist dies nicht der Fall, so wird keine Kompensation ausgelöst.

Liegt hingehen ein Erreichen oder Überschreiten vor (Pfad y), so wird bei der anschließenden dritten Abfrage 52 abgefragt, ob der Vordruck des Bremssystems 12 kleiner ist als ein Schwellwert. Ist dies nicht der Fall (Pfad n) und ist der Vordruck größer als oder gleich dem Schwellwert, so ergibt sich bei Operation 54 ein aktiver Druckaufbau mittels des Aggregats 28 in Abhängigkeit vom Vordruck. Ist der Vordruck des Bremssystems 12 kleiner ist als ein Schwellwert (Pfad y), so ergibt sich bei Operation 56 ein aktiver Druckaufbau mittels des Aggregats 28 in Abhängigkeit von der ermittelten Position des Betätigungselements 16 bis zu einem vorgebbaren Maximaldruck, der einer tolerierbaren Verzögerung des Fahrzeugs entspricht.

Durch die Verwendung eines redundanten Signals ist die Wahrscheinlichkeit einer Fehlaktivierung begrenzt. Die Eigensicherheit des Systems kann aber auch noch erhöht werden, wenn der Druckaufbau bis zur Erreichung der bisherigen Druckschwelle begrenzt ist.

Als weitere Absicherung kann der Druckaufbau nur auf Basis der aktuellen Position des Betätigungselements 16 auf seinem Verstellweg ohne Berücksichtigung des Vordrucks zeitlich begrenzt sein. Hier ist jedoch die Beeinflussung des Vordrucks des Bremssystems 12 durch den aktiven Druckaufbau zu beachten.

Der aktive Druckaufbau wird ab dem Erreichen/Überschreiten der Auslöseposition gestartet. Diese Auslöseposition kann vom Status eines Offsetabgleichs abhängig sein - kleinere Schwelle sobald der Sensor 32 abgeglichen ist.

## Patentansprüche

1. Verfahren zur Kompensation eines mangelnden Druckaufbaus im Bremssystem (12) eines Fahrzeugs, insbesondere Kraftfahrzeugs, bei einem Ausfall oder einer Fehlfunktion einer Bremskraftverstärkereinrichtung (18) zur Bremskraftunterstützung bei Betätigung eines Betätigungselements (16) des Bremssystems (12), wobei die Kompensation mittels eines Aggregats (28) zum zusätzlichen Druckaufbau im Bremssystem (12) und ein Auslösen dieser Kompensation in Abhängigkeit einer Position des Betätigungselements (16) auf dessen Verstellweg erfolgt, wobei kontinuierlich oder periodisch eine aktuelle Position des Betätigungselements (16) auf dem Verstellweg ermittelt wird und wobei das Auslösen sowie der zusätzliche Druckaufbau in Abhängigkeit dieser ermittelten aktuellen Position erfolgt,
**dadurch gekennzeichnet, dass** die Kompensation ausgelöst wird, wenn die aktuelle Position eine vorgebbare Auslöseposition auf dem Verstellweg erreicht oder überschreitet.

2. Verfahren nach Anspruch 1, **dadurch gekennzeichnet, dass** die Kompensation durch eine Fahrdynamikregelung eines Fahrassistent-Systems des Fahrzeugs erfolgt.

3. Verfahren nach einem der vorhergehenden Ansprüche, **dadurch gekennzeichnet, dass** die Kompensation weiterhin in Abhängigkeit eines Vordrucks des Bremssystems (12) erfolgt.

4. Verfahren nach einem der vorhergehenden Ansprüche, **dadurch gekennzeichnet, dass** aktuelle Position des Betätigungselements (16) mittels eines Sensors (32) ermittelt wird.

5. Verfahren nach einem der vorhergehenden Ansprüche, **dadurch gekennzeichnet, dass** der Druckaufbau zur Kompensation mittels des Aggregats (28) nach dem Auslösen während einer einstellbaren Zeit begrenzt ist.

6. System (10) zur Kompensation eines mangelnden Druckaufbaus im Bremssystem (12) eines Fahrzeugs bei einem Ausfall oder einer Fehlfunktion einer Bremskraftverstärkereinrichtung (18) zur Bremskraftunterstützung bei Betätigung eines Betätigungselements (16) des Bremssystems (12) zur Durchführung des Verfahrens nach einem der vorhergehenden Ansprüche, wobei das System (10) ein Aggregat (28) zum Druckaufbau im Bremssystem (12) aufweist, enthaltend einen Sensor (32) zur kontinuierlichen oder periodischen Ermittlung einer aktuellen Position des Betätigungselements (16) auf seinem Verstellweg und einer Einrichtung (34) zur Steuerung und/oder Regelung des Aggregats (28) in Abhängigkeit dieser ermittelten aktuellen Position.

7. System nach Anspruch 6, **dadurch gekennzeichnet, dass** das System (10) Teil eines Fahrassistenz-Systems des Fahrzeugs ist.

8. System nach Anspruch 6 oder 7, **dadurch gekennzeichnet, dass** die Einrichtung (34) zur Steuerung und/oder Regelung des Aggregats (28) weiterhin ein Eingangssignal proportional zum Vordruck des Bremssystems (12) erhält.

9. System nach einem der Ansprüche 6 bis 8, **dadurch gekennzeichnet, dass** das Betätigungselement (16) ein Pedal (14) und der Sensor (32) ein Pedalwegsensor ist.

10. Vorrichtung, enthaltend Mittel, die zur Durchführung der vorstehend genannten Verfahren ausgestattet sind.

## Claims

1. Method for compensating for an insufficient pressure build-up in the brake system (12) of a vehicle, in particular a motor vehicle, in the event of a failure or malfunction of a brake force booster (18) for brake force assistance upon actuation of an actuating element (16) of the brake system (12), the compensation being carried out by means of an assembly (28) for the additional pressure build-up in the brake system (12) and triggering this compensation as a function of a position of the actuating element (16) on its adjustment travel, a current position of the actuating element (16) on the adjustment travel being ascertained continuously or periodically, and the triggering and the additional pressure build-up being carried out as a function of this ascertained current position, **characterized in that** the compensation is triggered if the current position reaches or exceeds a predefinable triggering position on the adjustment travel.

2. Method according to Claim 1, **characterized in that** the compensation is carried out by a driving dynamics control system of a driver assistance system of the vehicle.

3. Method according to one of the preceding claims, **characterized in that** the compensation is additionally carried out as a function of a pilot pressure in the brake system (12).

4. Method according to one of the preceding claims, **characterized in that** the current position of the actuating element (16) is ascertained by means of a sensor (32).

5. Method according to one of the preceding claims, **characterized in that** the pressure build-up for compensation by means of the assembly (28) is limited during an adjustable time after the triggering.

6. System (10) for compensating for an insufficient pressure build-up in the brake system (12) of a vehicle in the event of a failure or malfunction of a brake force booster (18) for brake force assistance upon actuation of an actuating element (16) of the brake system (12), for carrying out the method according to one of the preceding claims, wherein the system (10) has an assembly (28) for pressure build-up in the brake system (12), containing a sensor (32) for continuously or periodically ascertaining a current position of the actuating element (16) on its adjustment travel, and a device (34) for the open-loop and/or closed-loop control of the assembly (28) as a function of this ascertained current position.

7. System according to Claim 6, **characterized in that** the system (10) is part of a driver assistance system of the vehicle.

8. System according to Claim 6 or 7, **characterized in that** the device (34) for the open-loop and/or closed-loop control of the assembly (28) additionally receives an input signal proportional to the pilot pressure of the brake system (12).

9. System according to one of Claims 6 to 8, **characterized in that** the actuating element (16) is a pedal (14) and the sensor (32) is a pedal travel sensor.

10. Apparatus containing means which are equipped to carry out the aforementioned method.

## Revendications

1. Procédé de compensation d'un défaut d'établissement de la pression dans le système de freinage (12) d'un véhicule, en particulier d'un véhicule automobile, en cas de défaillance ou de fonctionnement défectueux d'un dispositif (18) d'amplification de la force de freinage qui assiste la force de freinage lors de l'actionnement d'un élément d'actionnement (16) du système de freinage (12), la compensation s'effectuant au moyen d'un ensemble complémentaire (28) d'établissement de pression dans le système de freinage (12) et le déclenchement de cette compensation ayant lieu en fonction de la position de l'élément d'actionnement (16) sur sa course d'actionnement, la position effective de l'élément d'actionnement (16) sur sa course d'actionnement étant déterminée de manière continue ou périodique et le déclenchement ainsi que l'établissement complémentaire de la pression ayant lieu en fonction de la position effective ainsi déterminée,
**caractérisé en ce que**
la compensation est déclenchée si la position effective atteint ou dépasse une position prédéterminée de déclenchement sur la course d'actionnement.

2. Procédé selon la revendication 1, **caractérisé en ce que** la compensation s'effectue par une régulation de la dynamique de roulage d'un système d'assistance au roulage du véhicule.

3. Procédé selon l'une des revendications précédentes, **caractérisé en ce que** la compensation a lieu en outre en fonction d'une pression préalable du système de freinage (12).

4. Procédé selon l'une des revendications précédentes, **caractérisé en ce que** la position effective de l'élément d'actionnement (16) est déterminée au moyen d'un capteur (32).

5. Procédé selon l'une des revendications précédentes, **caractérisé en ce que** l'établissement de la pression de compensation au moyen de l'ensemble (28) est limité à une durée réglable qui suit le déclenchement.

6. Système (10) de compensation d'un défaut d'établissement de la pression dans le système de freinage (12) d'un véhicule, en particulier d'un véhicule automobile, en cas de défaillance ou de fonctionnement défectueux d'un dispositif (18) d'amplification de la force de freinage qui assiste la force de freinage lors de l'actionnement d'un élément d'actionnement (16) du système de freinage (12) en vue de la mise en oeuvre du procédé selon l'une des revendications précédentes, le système (10) présentant un ensemble (28) d'établissement de la pression dans le système de freinage (12), contenant un capteur (32) qui détermine de manière continue ou périodique la position effective de l'élément d'actionnement (16) sur sa course d'actionnement et un dispositif (34) de commande et/ou de régulation de l'ensemble (28) en fonction de cette position effective ainsi déterminée.

7. Système selon la revendication 6, **caractérisé en ce que** le système (10) fait partie d'un système d'assistance au roulage du véhicule.

8. Système selon les revendications 6 ou 7, **caractérisé en ce que** le dispositif (34) de commande et/ou de régulation de l'ensemble (28) reçoit en outre un signal d'entrée proportionnel à la pression préalable du système de freinage (12).

9. Système selon l'une des revendications 6 à 8, **caractérisé en ce que** l'élément d'actionnement (16) est une pédale (14) et le capteur (32) un capteur de course de pédale.

10. Ensemble de commande de moyens qui sont configurés en vue de mettre en oeuvre le procédé défini plus haut.
